Europäisches Patentamt

European Patent Office

Office européen des brevets

(11) Publication number : **0 404 257 B1**

# (12) EUROPEAN PATENT SPECIFICATION

(45) Date of publication of patent specification :
05.05.93 Bulletin 93/18

(51) Int. Cl.⁵ : **F24F 11/04,** G05D 7/06

(21) Application number : **90201591.6**

(22) Date of filing : **19.06.90**

(54) Ventilation grill.

(30) Priority : **22.06.89 BE 8900684**

(43) Date of publication of application :
**27.12.90 Bulletin 90/52**

(45) Publication of the grant of the patent :
**05.05.93 Bulletin 93/18**

(84) Designated Contracting States :
**DE DK FR GB LU NL SE**

(56) References cited :
**NL-A- 8 105 360**
**US-A- 3 237 547**
**US-A- 3 757 808**

(73) Proprietor : **ARALCO, Naamloze**
**Vennootschap**
**Evangeliestraat 124**
**B-9160 Hamme (BE)**

(72) Inventor : **De Schrijver, Hubert**
**Nijverheidslaan 189**
**B-9170 Waasmunster (BE)**

(74) Representative : **Donné, Eddy**
**Bureau M.F.J. Bockstael nv Arenbergstraat 13**
**B-2000 Antwerpen (BE)**

EP 0 404 257 B1

## Description

The present invention relates to a ventilation grill, comprising a longitudinal housing open on two opposite longitudinal sides, and a drum rotatably mounted in the housing with its longitudinal axis coïnciding with the longitudinal axis of the housing, said drum being traversed by a passage way for the air, the flow opening of the ventilation grill being determined by the position of the drum inside the housing, the drum closing off in a closed position the open sides of the housing and the maximum flow opening being the complete passage way of the drum in a position 90 degrees different from said closed position.

It is known that rotating ventilation grills always have to be put into a certain position manually up until now, position in which such ventilation grills normally remain adjusted until further manual intervention.

A ventilation grill of this kind is disclosed in NL-A-8105360.

It is also known that a certain adjustment can be very favourable at a certain moment but at a later time, for example when the wind has picked up or when the wind has died down, can be undesired or adverse.

Of course the flow rate of a ventilation grill will always be dependent upon the size of the flow opening whereby it is clear that a desired flow will be influenced by the wind velocity resulting from an adjustment of the aforementioned flow opening.

A specific arrangement can therefore clearly have undesirable consequences among others for the ventilation when an alteration occurs in the meantime.

The present invention therefore also relates to means which permits an automatic control of a ventilation grill in order to obtain the flow opening adjustment of the ventilation grill dependent on the wind veloccity.

For this purpose, the ventilation grill comprises driving means for rotating the drum and a device for the adjustment of the flow opening, said device comprising two feelers mounted inside the drum, a first one measuring the temperature of the airflow, the second one being brought up to and maintained at a temperature which is higher than the temperature of the first feeler, a processing unit to which the temperature measured by the first feeler is communicated and the power required to maintain the second feeler at the higher temperature is communicated in order to regulate the power supply of the heating unit of the second feeler, the power supply of the driving means for the drum being regulated by the processing unit.

A device for controlling the fluid flow and comprising a valve, two feelers and a controll unit connected to said feelers and controlling said valve is known as such from US-A-3 757 808. As well the valve as the feelers are however mounted in a duct, the feelers being situated both downstreams the valve.

In a particular embodiment of the invention, the feelers are mounted diagonally opposite to each other with respect to the rotating axis of the drum.

In an advantageous form of embodiment, the housing consists of two end disks and two parallel sections fastened with their ends to the disks, the feelers being mounted on an end disk of the housing.

In order to show better the characteristics according to the present invention, a preferred embodiment is described hereafter, as example without any restrictive character, with reference to the enclosed drawings, in which :

figure 1 shows a schematic cross-section of a rotating ventilation grill that is equipped with a device according to the invention;

figure 2 shows a schematic view according to arrow F2 in figure 1;

figure 3 show an example of a drive motor which can be applied with a device according to the invention.

In the figures a rotating ventilation grill 1 is schematically shown that, as known, principally consists of sections 2, 3 in which a drum 4 is rotatably disposed. The drum 4 is, by means of brushes 5 installed sealed airtight in the sections 2 and 3 and consists of shells 6. 7 which for example are connected to each other at their free extremities by means of disks 8, 9 whereby preferably a gauze 10 is installed between the shells 6, 7.

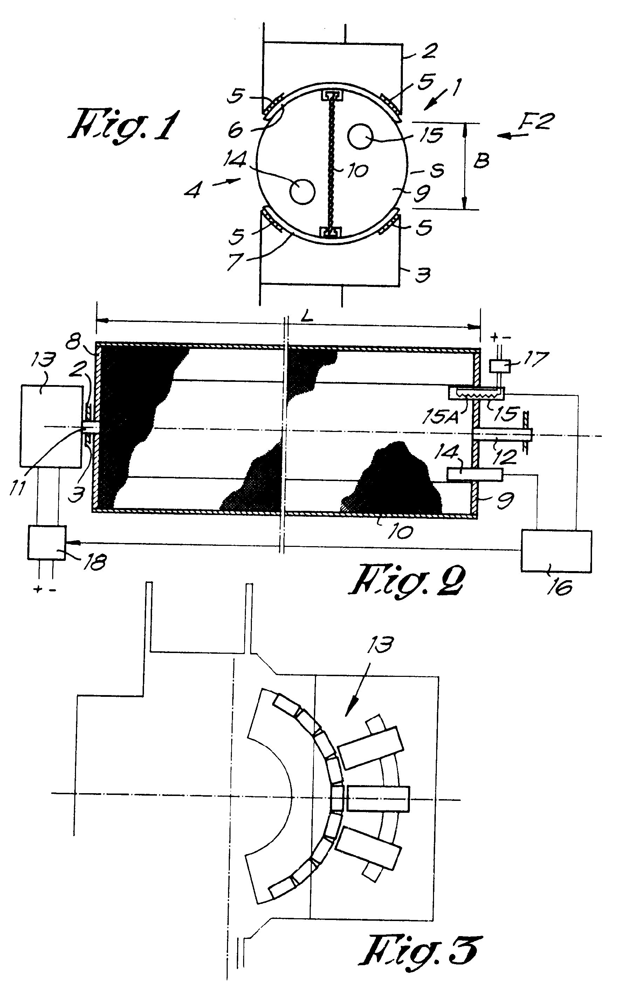

In the position as drawn in figure 1 the rotating ventilation grill is in the open position, whereby it is sufficient to rotate the drum 4 in order partially or completely to close the obtained opening.

The maximum flow opening S is in this case equal to B x L.

The disks 8 and 9 can be attached to a shaft, respectively 11 and 12, which are mounted on bearings in the aforementioned sections 2 and 3 and whereby in this case, according to the invention, a drive motor 13 is coupled to one of these shafts.

According to the invention a first feeler 14 is further installed in the flow opening S the purpose of which is to measure the temperature of the air flowing through the flow opening S and a second feeler 15 is provided in this flow opening which, for example can be heated via a built-in electric resistance 15A up to a temperature which is higher than that of the ambient temperature, for example up to a temperature which is 20 to 25 degrees higher than the temperature which is measured by the first feeler 14.

The signal coming from the feeler 14 will for this purpose be supplied to a processing unit 16 which acts

2

on a switch 17 via which the electric resistance 15A is maintained at the desired temperature.

The feeler 15 will be cooled off by the air flowing by, whereby the power that is required for maintaining the feeler 15 at this desired temperature will subsequently be registered by the processing unit 16 which will transform this information into a signal from which the velocity will be deduced of the air which passes through the flow opening S.

It is noted that the grill can be adjusted beforehand at for example an air velocity of approximately 1.7 m/s which corresponds for example to 150 m³/hr.

The desired flow opening S, is then calculated by the processing unit with the formula

$$S = \frac{Q \text{ (desired ventilation or airflow}}{V \text{ (air or wind velocity)}}$$

whereby the ventilation is indicated in m³/hr and the wind velocity in m/hr.

The signals thus obtained are transmitted by the processing unit 16 to a suitable switch 18 which commands the motor 13.

The motor 13 can be formed by any step-by-step motor, for example a direct current unit that operates according to the step-by-step principle and that is schematically shown in figure 3 through which, according to the wind velocity, the position of the drum 4 is suitably altered and this, preferably with a certain delay, through which an average is taken of the measurements which were performed over the last 10 to 15 seconds.

It is clear that the processing unit 16 can be programmed in such a manner that from a specified temperature of the airstream which passes through the opening S the grill is placed in the completely opened position of figure 1. This temperature could for example be determined at 30 degrees Centigrade.

As energy source for operating the motor 13, on the one hand, and/or for heating the resistance 16, on the other hand, use can be made of both mains current and of a battery as well as of solar cells or similar.

In this embodiment the feelers 14 and 15 are installed diagonally in the drum 4 through the disk 6 in order therefore to make a rotation of the drum 4 over an angle of 90 degrees possible.

Although a rotating ventilation grill is described in the preceding description as example it is clear that the device according to the invention can be applied in exactly the same manner by installing the aforementioned feelers 14 and 15 in the flow opening of a sliding grill and to drive the movable part of the sliding grill in a suitable manner, by means of a step-by-step motor and via a rack and pinion mechanism, in order to regulate the flow opening suitably depending on the velocity of the air which passes through there.

## Claims

1. Ventilation grill, comprising a longitudinal housing (2, 3, 8, 9) open on two opposite longitudinal sides, and a drum (4) rotatably mounted in the housing (2, 3, 8, 9) with its longitudinal rotation axis coïnciding with the longitudinal axis of the housing (2, 3, 8, 9) said drum being traversed by a passage way for the air, the flow opening S of the ventilation grill being determined by the position of the drum (4) inside the housing (2,3,8,9) the drum (4) closing off in a closed position the open sides of the housing (2,3,8,9) and the maximum flow opening S being the complete passage way of the drum (4) in a position 90 degrees different from said closed position, characterised in that it comprises driving means (13) for rotating the drum (4) and a device for the adjustment of the flow opening S, said device comprising two feelers (14, 15) mounted inside the drum (4), a first one (14) measuring the temperature of the airflow, the second one (15) being brought up to and maintained at a temperature which is higher than the temperature of the first feeler (14), a processing unit (16) to which the temperature measured by the first feeler (14) is communicated and the power required to maintain the second feeler (15) at the higher temperature is communicated in order to regulate the power supply of the heating unit of the second feeler (15), the power supply of the driving means (13) for the drum (4) being regulated by the processing unit (16).

2. Ventilation grill according to claim 1, characterised in that the feelers (14 and 15) are mounted diagonally opposite to each other with respect to the rotating axis of the drum (4).

3. Ventilation grill according to claim 1 or 2, characterised in that the housing consists of two end disks (8 and 9) and two parallel sections (2 and 3) fastened with their ends to the disks (8 and 9), the feelers (14 and 15) being mounted on an end disk (9) of the housing (2,3,8,9).

4. Ventilation grill according to claim 3, characterised in that the feelers (14) and (15) are placed at an angle of 45 degrees to the horizontal in the closed, respectively open position of the ventilation grill.

5. Ventilation grill according to either one of claims 1 to 4, characterised in that the driving means (13) are formed by a step-by-step motor.

6. Ventilation grill according to either one of claims 1 to 4, characterised in that the driving means (13) are formed by a direct current driving unit that is based on the step-by-step principle.

7. Ventilation grill according to either one of claims 1 to 6, characterised in that the feeler (15) is provided with an electric resistance (15A).

8. Ventilation grill according to claim 7 characterised in that the resistance (15A) of the feeler (15) is connected to a power source via a switch or similar (17) whereby this switch (17) receives its commands from the processing unit (16).

9. Ventilation grill according to either one of claims 1 to 8, characterised in that the driving means (13) are connected to a power source via a switch or similar (18) whereby this switch (18) receives its commands from the processing unit (16).


## Patentansprüche

1. Lüftungsgitter, das in der Längsrichtung ein Gehäuse (2, 3, 8, 9) umfaßt, offen an zwei sich gegenüber befindlichen langen Seiten, und einen Trommel (4) drehend montiert im Gehäuse (2, 3, 8, 9) mit seiner Längsdrehachse übereinstimmend mit der Längsachse des Gehäuses (2, 3, 8, 9), der genannte Trommel wird durchquert von einem Durchlaß für die Luft, die Durchflußöffnung S des Belüftungsgitters wird bestimmt von der Lage des Trommels (4) innerhalb des Gehäuses (2, 3, 8, 9), der Trommel (4) sperrt in der geschlossenen Lage die offenen Seiten des Gehäuses (2, 3, 8, 9) ab und die maximale Durchflußöffnung S ist der vollständige Durchlaß des Trommels (4) in einder Lage 90 Grad gedreht von der genannten geschlossenen Lage, dadurch gekennzeichnet, daß sie Antriebsanordnungen umfaßt zwei Sensoren (14, 15) die imerhalb des Trommels (4) montiert sind, einen ersten (14) der die Temperatur der Luftströmung mißt, den zweiten (15) der auf eine Temperatur gebracht und gehalten wird die höher ist als die Temperatur des ersten Sensors (14), eine Prozessoreinheit (16) der die von dem ersten Sensor (14) gemessene Temperatur zugeleitet wird und die benötigte Kraft um den zweiten Sensor (15) auf der höheren Temperatur zu handhaben wird zugeführt um die Kraftzufuhr der Heizeinheit des zweiten Sensors (15) zu steuern, die Kraftzufuhr der Antriebsanordmung (13) für den Trommel (4) wird gesteuert von der Prozessoreinheit (16).

2. Lüftungsgitter nach Anspruch 1, dadurch gekennzeichnet, daß die Sensoren (14 und 15) einander diagonal gegenüber montiert worden sind in bezug auf die Drehachse des Trommels.

3. Lüftungsgitter nach Anspruch 1 oder 2, dadurch gekennzeichnet, daß das Gehäuse besteht aus zwei Endscheiben (8 und 9) und zwei parallelen Teilen (2 und 3) mit ihren Enden befestigt an den Scheiben (8 und 9), den Sensoren (14 und 15) montiert auf einer Endscheibe (9) des Gehäuses (2, 3, 8, 9).

4. Lüftungsgitter nach Anspruch 3, dadurch gekennzeichnet, daß die Sensoren (14) und (15) in einem Winkel im 45 Grad gegenüber dem Waagerechten angeordnet sind in der geschlossenen, respektive geöffneten Lage des Lüftungsgitters.

5. Lüftungsgitter nach einem der Ansprüche 1 bis 4, dadurch gekennzeichnet, daß die Antriebsanordnungen (13) gebildet werden von einem Schrittmotor.

6. Lüftungsgitter nach einem beliebigen der Ansprüche 1 bis 4, dadurch gekennzeichnet, daß die Antriebsanordnung (13) gebildet wird von einer Gleichstromantriebseinheit nach dem Schritt-um-Schritt Prinzip.

7. Lüftungsgitter nach einem beliebigen der Ansprüche 1 bis 6, dadurch gekennzeichnet, daß der Sensor

**EP 0 404 257 B1**

(15) ausgestattet ist mit einem elektrischen Widerstand (15A).

8.  Lüftungsgitter nach Anspruch 7, dadurch gekennzeichnet, daß der Widerstand (15A) des Sensors (15) verbunden ist mit einer Kraftquelle mittels eines Schalters oder ähnliches (17) wobei dieser Schalter (17) die Kommandos von der Prozessoreinheit (16) erhält.

9.  Lüftungsgitter nach einem beliebigen der Ansprüche 1 bis 8, dadurch gekennzeichnet, daß die Antriebsanordnung (13) mit einer Kraftquelle verbunden ist mittels eines Schalters oder ähnliches (18) wobei dieser Schalter (18) die Kommandos von der Prozesssoreinheit (16) erhält.

**Revendications**

1.  Grille d'aération comprenant un logement longitudinal (2, 3, 8, 9) ouvert sur deux côtés longitudinaux opposés, ainsi qu'un tambour (4) monté en rotation dans le logement (2, 3, 8, 9), dont l'axe longitudinal de rotation coïncide avec l'axe longitudinal du logement (2, 3, 8, 9), ledit tambour étant traversé par une voie de passage pour l'air, l'ouverture d'écoulement S de la grille d'aération étant déterminée par la position du tambour (4) à l'intérieur du logement (2, 3, 8, 9), le tambour (4) obturant, dans une position fermée, les côtés ouverts du logement (2, 3, 8, 9) et l'ouverture d'écoulement étant maximale lorsque la voie de passage complète du tambour (4) se trouve dans une position différente de l'ordre de 90° par rapport à la dite position fermée, caractérisée en ce qu'elle comprend un moyen d'entraînement (13) pour faire tourner le tambour (4), ainsi qu'un dispositif pour le réglage de l'ouverture d'écoulement S, ledit dispositif comprenant deux palpeurs (14, 15) montés à l'intérieur du tambour (4), dont le premier (14) mesure la température de l'écoulement d'air, le second (15) étant amené et maintenu à une température qui est supérieure à la température du premier palpeur (14), une unité de traitement (16) à laquelle est communiquée la température mesurée par le premier palpeur (14) et à laquelle est communiquée l'énergie requise pour maintenir le second palpeur (15) à la température plus élevée dans le but de réguler l'alimentation en énergie de l'unité de chauffage du second palpeur (15), l'alimentation en énergie de l'élément d'entraînement (13) pour le tambour (4) étant régulée par l'unité de traitement (16).

2.  Grille d'aération selon la revendication 1, caractérisée en ce que les palpeurs (14 et 15) sont montés en position diagonale à l'opposé l'un de l'autre, par rapport à l'axe de rotation du tambour (4).

3.  Grille d'aération selon la revendication 1 ou 2, caractérisée en ce que le logement consiste en deux disques terminaux (8 et 9) et en deux profilés parallèles (2 et 3) fixés par leurs extrémités aux disques (8 et 9), les palpeurs (14 et 15) étant montés sur un disque terminal (9) du logement (2, 3, 8, 9).

4.  Grille d'aération selon la revendication 3, caractérisée en ce que les palpeurs (14 et 15) sont placés en formant un angle de 45 degrés par rapport à l'horizontale dans la position fermée respectivement ouverte de la grille d'aération.

5.  Grille d'aération selon l'une quelconque des revendications 1 à 4, caractérisée en ce que le moyen d'entraînement (13) est formé par un moteur pas-à-pas.

6.  Grille d'aération selon l'une quelconque des revendications 1 à 4, caractérisée en ce que le moyen d'entraînement (13) est formé par une unité d'entraînement à courant continu, qui est basée sur le principe du pas-à-pas.

7.  Grille d'aération selon l'une quelconque des revendications 1 à 6, caractérisée en ce que le palpeur (15) est muni d'une résistance électrique (15A).

8.  Grille d'aération selon la revendication 7, caractérisée en ce que la résistance (15A) du palpeur (15) est reliée à une source d'énergie, via un commutateur (17) ou analogues, ce commutateur (17) recevant sa commande de l'unité de traitement (16).

9.  Grille d'aération selon l'une quelconque des revendications 1 à 8, caractérisée en ce que le moyen d'entraînement (13) est relié à une source d'énergie, via un commutateur (18) ou analogues, ledit commutateur (18) recevant sa commande de l'unité de traitement (16).

5

*Fig. 1*

*Fig. 2*

*Fig. 3*